# EUROPEAN PATENT APPLICATION

(11) **EP 2 854 450 A1**
(43) Date of publication of application: **01.04.2015**
(21) Application number: 13360030.4
(22) Date of filing: 27.09.2013
(51) Int. Cl.: H04W 36/08, H04W 84/04, H04W 88/12

(54) **Reducing signaling load to the corenetwork caused by frequent cell changes of an user equipment among small cells**

(71) Applicant: ALCATEL LUCENT, 92100 Boulogne-Billancourt (FR)
(72) Inventor: Palat, Sudeep K., Swindon, Wiltshire SN5 7DJ (GB); Worrall, Chandrika K, Swindon, Wiltshire SN5 7DJ (GB)
(74) Representative: Greenwood, Matthew David

(57) **Abstract**

A method, in a radio communication system, for managing a signalling load between a core network portion of the system and an access network portion of the system in response to handover of user equipment (UE) between a source node and a target node in the access network portion, comprising providing a mobility anchor device supporting centralised radio resource control for the system, transmitting a node change request to the target node from the mobility anchor device, transmitting radio resource control parameters from the device to the UE in response to the request.

## Description

### TECHNCIAL FIELD

The present invention relates generally to the management of signal load resulting from user equipment mobility between small cells.

### BACKGROUND

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as pico cells, or metro cells, typically use a customer's broadband internet connection, for example DSL, cable or the like, as backhaul towards the macrocellular network.

Small cell deployment for handling capacity needs in high traffic areas, such as hot spot areas, is an area of investigation. In such situations, it is likely that a large number of small cells would be deployed in order to ensure that coverage and capacity needs are met. The use of small cells, particularly when large numbers are provided in a relatively small geographic area, can result in a significant increase of signaling load towards the core network as user equipment (UE) is handed over between cells due to UE movement for example.

### SUMMARY

According to an example, there is provided a method, in a radio communication system, for managing a signalling load between a core network portion of the system and an access network portion of the system in response to handover of user equipment (UE) between a source node and a target node in the access network portion, comprising providing a mobility anchor device supporting centralised radio resource control for the system, transmitting a node change request to the target node from the mobility anchor device, transmitting radio resource control parameters from the device to the UE in response to the request. The mobility anchor device can be operable to support radio resource control for multiple nodes forming a cluster of small cells. The mobility anchor device can be operable to store data representing UE context related parameters. An interface of a mobility management entity of the core network portion can be terminated at the mobility anchor device. An interface of a serving gateway of the core network portion can be terminated at the mobility anchor device or at the cell site of the source or target node. UE mobility between the source node and the target node can be shielded from the core network portion of the system by performing mobility related signalling at the mobility anchor device.

According to an example, there is provided a mobility anchor device to manage a signalling load between a core network portion of a radio telecommunications system and an access network portion of the system in response to handover of user equipment (UE) between a source node and a target node in the access network portion, the device operable to transmit a node change request to the target node in response to radio measurement parameters for the UE received by the device, and transmit radio resource control parameters to the UE in response to the request. The device can be operable to support centralised radio resource control for the system. The device can be operable to interface with a mobility management entity of the core network portion. The device can be operable to interface with a serving gateway of the core network portion. The device can be operable to shield mobility related signalling as a result of UE mobility between the source node and the target node from the core network portion of the system.

According to an example, there is provided a radio communication system, comprising a core network portion including a mobility management entity and a serving gateway, an access network portion including a source node and a target node, and a mobility anchor device to manage a signal load between the core network portion and the access network portion in response to handover of user equipment (UE) between source node and the target node, the device operable to, transmit a node change request to the target node in response to radio measurement parameters for the UE received by the device, and transmit radio resource control parameters to the UE in response to the request. An interface between the mobility management entity and the access network can be terminated at the mobility anchor device. An interface between the serving gateway and the access network can be terminated at the mobility anchor device.

According to an example, there is provided a computer program product, comprising a computer usable medium having computer readable program code embodied therein, said computer readable program code adapted to be executed to implement a method, in a radio communication system, for managing a signalling load between a core network portion of the system and an access network portion of the system as provided above.

### BRIEF DESCRIPTION OF THE DRAWINGS

Embodiments will now be described, by way of example only, with reference to the accompanying drawings, in which:
Figure 1 is a schematic representation of a system according to an example;
Figure 2 is a schematic representation of a system according to an example in which a cluster of small cells is provided;
Figure 3 is a schematic representation of a system architecture according to an example;
Figure 4 is a schematic representation of a signalling flow during handover of UE from one small cell to another small cell that are controlled by the same mobility anchor device according to an example;
Figure 5 is a schematic representation of a bearer setup procedure for dedicated bearer establishment according to an example;
Figure 6 is a schematic representation of a signalling flow for UE handover according to an example; and
Figure 7 is a schematic representation of an alternative system architecture according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, a method and system for enabling signaling load shielding for a core network when UE moves between small cells is provided. A mobility anchor device is provided to reduce signalling load to the core network. The mobility anchor device is a logical entity that can be located in a macro cell of the network.

According to an example, centralised radio resource control (RRC) common to a group of small cells within a cell cluster is provided for mobility control of UE, enabling UE mobility from one small cell to another small cell without core network signalling involvement, and which enables a data bearer to be switched from one small cell to another without core network signalling involvement. As there is no impact to the UE and radio interface legacy UE can be used without modification.

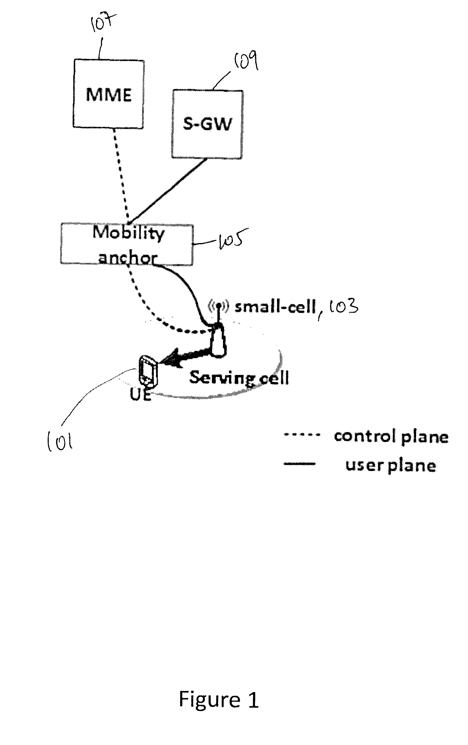

Figure 1 is a schematic representation of a system according to an example. UE 101 is connected to small cell 103. A mobility anchor device 105 operates between cell 103 and UE 101 and a mobility management entity (MME) 107 and a serving gateway 109 of a radio communications system. The mobility anchor device 105 shields UE mobility from the core network (107, 109) of the system so that signalling relating to handover processes for example as UE 101 moves from one small cell to another does not result in additional signalling load on the core network, which could be problematic in areas where multiple small cells are present and in which there is a high likelihood that UE will be regularly switching between cells.

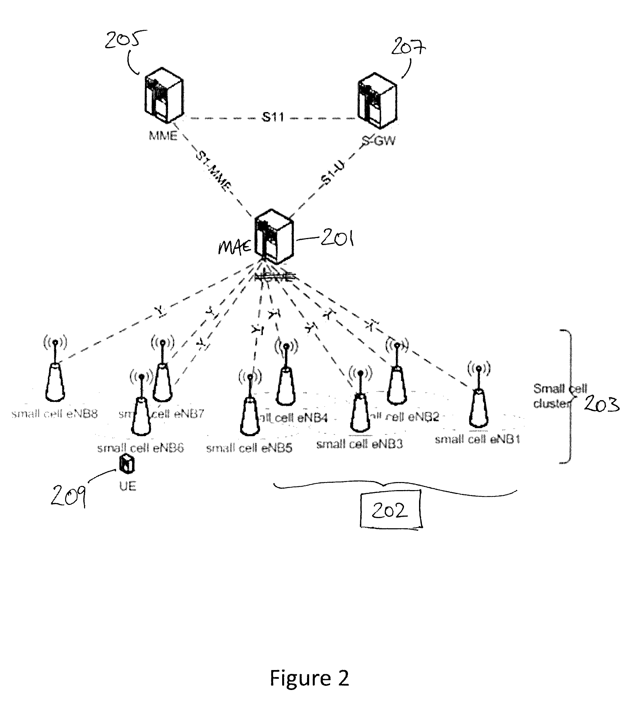

Figure 2 is a schematic representation of a system according to an example in which a cluster of small cells is provided. Mobility anchor entity 201 provides RRC support for a group of small cells 203 comprising multiple small cell nodes. The group of small cells 203 can be a single cluster of multiple small cell nodes (eNB1-8) or be composed of several small cell clusters each of which can be composed of one or more small cell nodes. The small cells 203 can be encompassed by a macro cell 202. The entity 201 is a logical entity which shields the core network (MME 205 and S-GW 207) from the signalling that occurs as a result of UE 209 mobility, as UE 209 moves from one small cell to another. Compared to a legacy case, S1-U and S1-MME transport is handled via the entity 201.

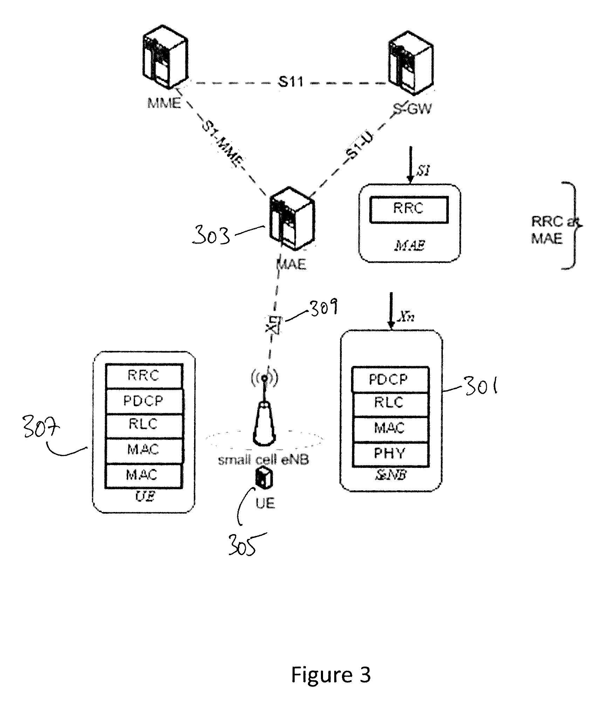

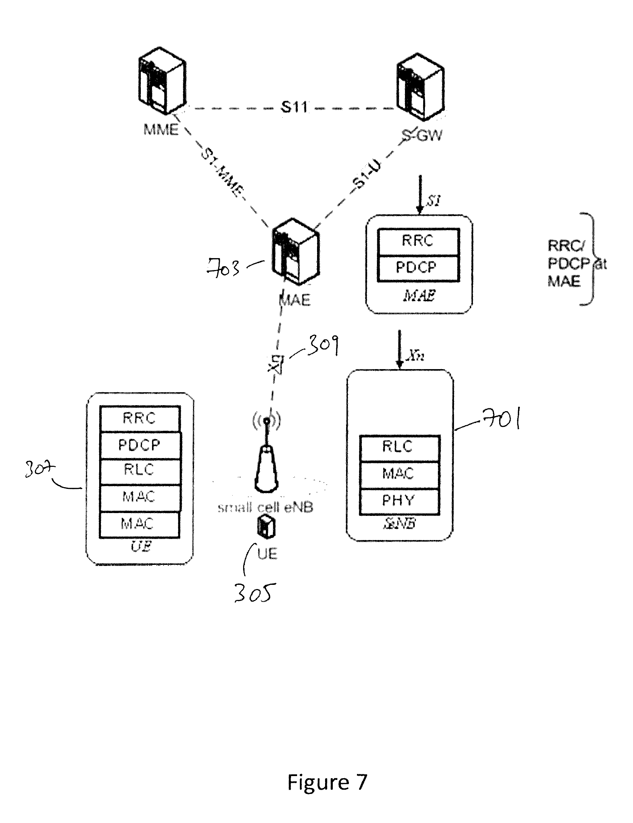

Figure 3 is a schematic representation of a system architecture according to an example. The components for the radio protocol stack (PHY/MAC/RLC/PDCP) are located at a eNB node 301 of the system as is typical. RRC protocol is located at the mobility anchor device 303. The UE 305 protocol stack 307 is the same as that of a legacy system. That is PHY/MAC/RLC/PDCP/RRC can be located at the UE 305. The protocol used for data/control transport over an Xn interface 309 between UE 305 and the mobility anchor device 303 can be similar to an X2 interface or an S1 interface as is typically used. Another example of a system architecture according to an example is shown in Figure 7. The architecture is similar to that shown in figure 3, but in the case of figure 7, the RRC and PDCP layers of the macro node stack 701 are located at the mobility anchor device 703.

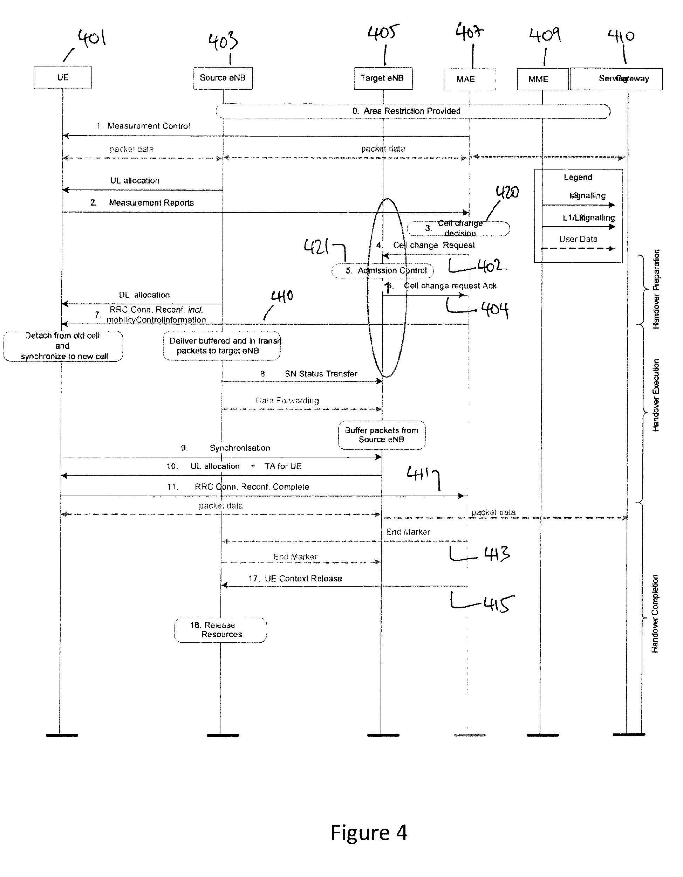

Figure 4 is a schematic representation of a signalling flow during handover of UE 401 from one small cell 403 to another small cell 405 that are controlled by the same mobility anchor device 407. User traffic and control signalling from MME 409 is transmitted to a small cell via device 407. Alternatively, user traffic can go directly from a Serving Gateway 410. The handover procedure from the UE 401 perspective is the same as in a legacy system, and so no UE modification is required.

Handover is triggered by the device 407 via source eNB 403, and can be based on radio parameter measurement reports from the UE 401. For example, measurement reports can indicate that UE 401 would be better served by target node 405 as it has moved or is moving out of range of node 403. The device 407 makes the decision to handover the UE 401 to target eNB 405. The device 407 is aware that the target eNB 405 is under its control, and therefore can be a node that forms part of a cluster of nodes that are controlled by the device 407.

The device 407 makes the decision to perform an X2 handover for the UE 401. Upon making the decision 420, device 407 transmits to the target eNB 405 a "cell change request" 402 for the UE 401. After radio resource management and admission control 421, the target eNB 405 sends a "cell change request acknowledge" 404 to the device 407. Device 407 generates an RRC connection reconfiguration message 410 for the UE 401. In an example, message 410 can be sent in response to sending cell change request message 402 and/or receiving cell change request acknowledge message 404.

The RRC connection reconfiguration message 410 is sent via the source eNB 403. Note that the cell change request Ack sent by the target eNB 405 includes RRC connection reconfiguration parameters for the UE 401 in the target eNB 405. Upon transmission of the RRC connection reconfiguration message to the UE 401, the source eNB 403 starts data forwarding and transferring service node (SN) status data to the target eNB 405.

In an example, the source eNB 403 is provided with the target eNB identity and X2 bearer setup information in order for SN status report and data forwarding to start over an X2 interface. This information can be provided by the device 407 in a new message or combined with the RRC connection reconfiguration message carrying the handover parameters.

The UE 401 transmits an RRC connection reconfiguration complete message 411 after gaining synchronization to the target eNB 405. Upon reception of the RRC connection reconfiguration complete message, the device 407 transmits an "end marker" message 413 informing the source eNB 403 of the end of downlink traffic to the UE 401 through the source eNB 403. This can be signalled in the user plane or by introducing new signalling for the "end marker" transmission. At the same time as transmission of the "end marker" message, the device 407 informs the source eNB 403 to release the UE 401 context. The "end marker" 413 and "UE context Release" 415 messages can also be combined into a single message. The source eNB 403 forwards the "end marker" message 413 to the target eNB 405.

In an example, RRC is located at the mobility anchor device. RRC at the mobility anchor device generates/receives RRC messages to/from the UE. However, radio resource management is kept at the eNB and the eNB is in charge of its radio resource allocation and configuration of lower layers. Thus the entity in charge of radio resource control and lower protocol control can be considered a virtual RRC located at the eNB. The virtual RRC at the eNB is not in direct communication with the UE. From the UE perspective, there is only one RRC and the location of the RRC at the network is not visible to the UE. Legacy UE operation can be performed, for example, with respect to reception of RRC connection reconfiguration, transmission of RRC connection reconfiguration complete and uplink synchronization.

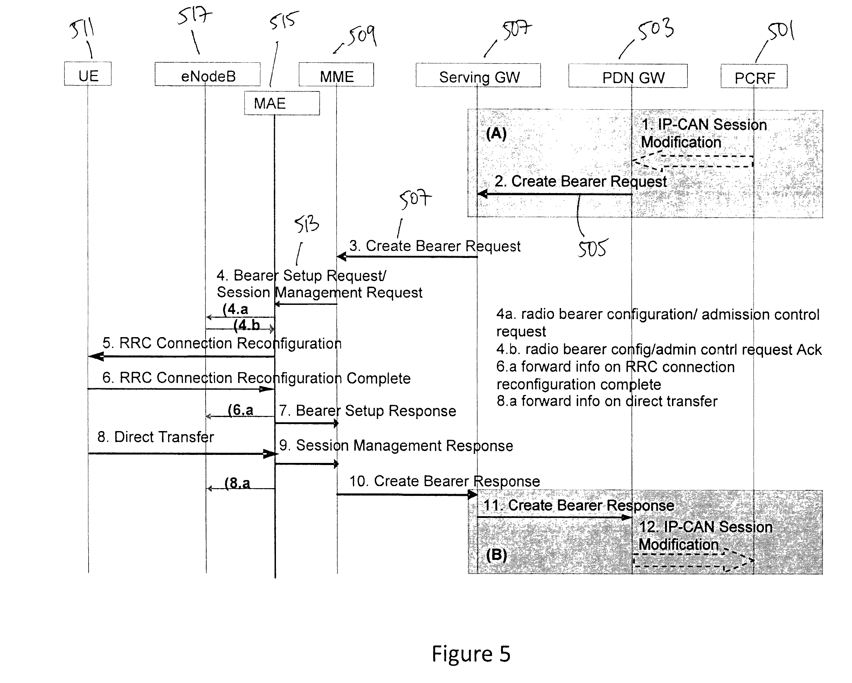

In an example, RRC functionality at the mobility anchor device has visibility of the radio resource management at the UE. Also the UE context is kept at the mobility anchor device. The virtual RRC at the eNB may also keep a full or partial UE context. The UE context related parameters are allocated by the eNB and communicated to the mobility anchor device over an Xn or a new interface. The parameters can include UE C-RNTI, RB configuration, PHY configuration, and dedicated resource configurations such as D-SR, PUCCH resources and so on. Having clear functional separation at the eNB and mobility anchor device enables a flexible mobility anchor device architecture. Figure 5 is a schematic representation of a bearer setup procedure for dedicated bearer establishment according to an example. Dedicated bearer establishment can be initiated by a Policy and Charging Rules Function (PCRF) 501 based on the arrival of data from an application with different QoS requirements requiring new bearer establishment. The public data network gateway (PDN GW) 503 uses the QoS information provided by the PCRF policy to assign the EPS bearer QoS (ie: QCI, ARP, GBR and MBR). PDN GW 503 generates a charging ID for the dedicated bearer. The PDN GW 503 sends a create bearer request message 505 to the serving GW 507. In an example, the message includes IMSI, EPS bearer QoS, S5/S8 TEID, charging Id, and the linked EPS bearer identity (which is the EPS bearer identity of the default bearer). The serving GW 507 sends the create bearer request message 507 (including IMSI, PTI, EPS bearer QoS, TFT, S1-TEID, PDN GW TEID, LBI) to the MME 509. The MME 509 selects an EPS bearer identity which has not yet been assigned to the UE 511. The MME 509 then builds a session management request 513 including the PTI, TFT, EPS bearer QoS parameters (excluding ARP), the EPS bearer identity and the LBI. The MME 509 then signals the bearer setup request 513 (EPS bearer identity, EPS bearer QoS, session management request, S1-TEID) message to the mobility anchor device 515.

The mobility anchor device 515 communicates to the eNB 517 the bearer setup and session management requests and requests radio admission control and radio bearer configuration for the UE 511 (4a, 4b). After admission control, the eNb 517 provides the radio parameters for the UE 511 to the mobility anchor device 515 where the mobility anchor device 515 generates the RRC connection reconfiguration message 5 based on the parameters provided by the eNB 517 and sends the message 5 to the UE 511. Upon reception of the RRC connection reconfiguration complete 6 and direct transfer 8 messages the mobility anchor device 515 forwards the information (6a, 8a) to the eNB 517.

In an example, one function of the mobility anchor device 515 is the generation of RRC connection reconfiguration messages 5 to the UE 511 based on the radio parameters gathered from the eNB 517. Another function of the mobility anchor device 515 is the decision to perform handover. How to perform the UE handover from one eNB to another within the same MAE is described above. If the handover is to be performed to an eNB under the control of a different mobility anchor device to that controlling the node to which the UE is currently connected, or an eNB which is not within the control of a mobility anchor device (e.g. a macro eNB), the handover procedure is slightly different compared to that used from eNB to eNB handover within the same mobility anchor device.

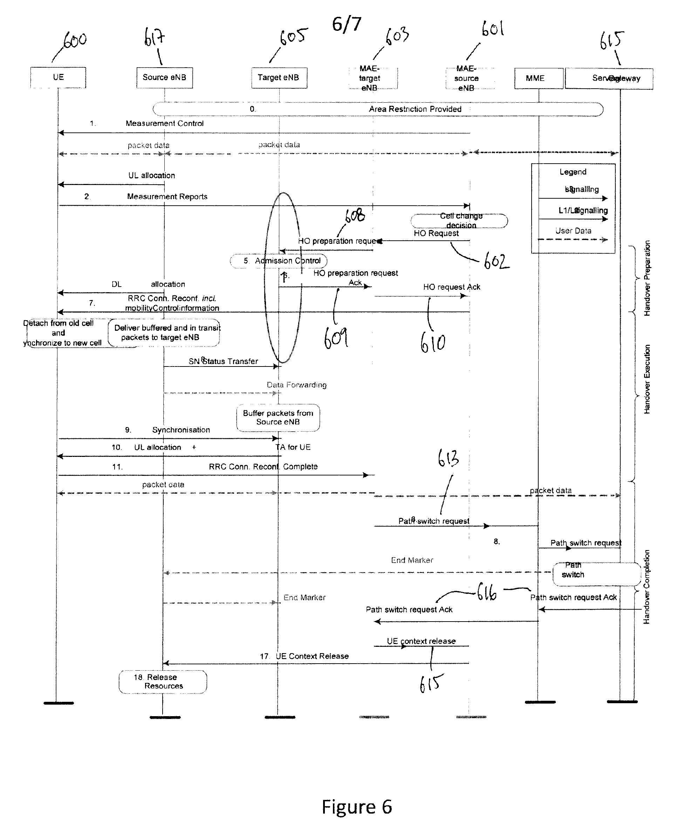

Firstly the mobility anchor device makes the decision as to whether the handover is to another node within the control of the mobility anchor device, or if it is to an eNB outside of the present mobility anchor device control for example. Figure 6 is a schematic representation of a signalling flow for UE 600 handover to an eNB under the control of a different mobility anchor device to that controlling the node to which the UE is currently connected. Following a determination to perform inter mobility anchor device handover, source mobility anchor device 601 requests handover 602 from the target mobility anchor device 603.

In an example, the message 602 includes the target eNB 605 identity. The target mobility anchor device 603 forwards the message in the form of a "handover (HO) preparation request" 608 to the indicated target eNB 605 belonging to the target mobility anchor device 603. HO preparation acknowledge 609 and HO request acknowledge 610 messages are sent as responses to the target mobility anchor device 603 and source mobility anchor device 601. Device 601 generates an RRC connection reconfiguration message 7 for the UE 600. In an example, message 7 can be sent from device 601 to UE 600 in response to sending HO request message 602 and/or receiving HO request acknowledge message 610.

Upon reception of an RRC connection reconfiguration complete message 11, the target mobility anchor device 603 sends a path switch request message 613 to the S-GW 615 where path switch is performed. An end maker is allocated and transmitted to the source eNB 617, which is communicated to the target eNB 605 over an X2/X interface, which is already established. The target mobility anchor device 603 initiates a UE context release message 615 upon reception of the path switch request acknowledgement message 616.

The security during the HO from one small cell to another within the same mobility anchor device follows the horizontal security key derivation as typically used in X2 handover for example. There is therefore no security impact on the UE or the network side.

Inter mobility anchor device HO may be seen as a new type of handover, which involves communication between the mobility anchor devices in addition to communication between source and target eNBs. The security key generation could follow horizontal or vertical key derivation depending on the availability of a direct interface between the two eNBs and the two mobility anchor devices in question.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a radio communication system, for managing a signalling load between a core network portion of the system and an access network portion of the system in response to handover of user equipment (UE) between a source node and a target node in the access network portion, comprising:
providing a mobility anchor device supporting centralised radio resource control for the system;
transmitting a node change request to the target node from the mobility anchor device;
transmitting radio resource control parameters from the device to the UE in response to the request.

2. A method as claimed in claim 1, wherein the mobility anchor device is operable to support radio resource control for multiple nodes forming a cluster of small cells.

3. A method as claimed in claim 1 or 2, wherein the mobility anchor device is operable to store data representing UE context related parameters.

4. A method as claimed in any preceding claim, wherein an interface of a mobility management entity of the core network portion is terminated at the mobility anchor device.

5. A method as claimed in any preceding claim, wherein an interface of a serving gateway of the core network portion is terminated at the mobility anchor device or at the cell site of the source or target node.

6. A method as claimed in any preceding claim, wherein UE mobility between the source node and the target node is shielded from the core network portion of the system by performing mobility related signalling at the mobility anchor device.

7. A mobility anchor device to manage a signalling load between a core network portion of a radio telecommunications system and an access network portion of the system in response to handover of user equipment (UE) between a source node and a target node in the access network portion, the device operable to:
transmit a node change request to the target node in response to radio measurement parameters for the UE received by the device; and
transmit radio resource control parameters to the UE in response to the request.

8. A mobility anchor device as claimed in claim 7, wherein the device is operable to support centralised radio resource control for the system.

9. A mobility anchor device as claimed in claim 7 or 8, operable to interface with a mobility management entity of the core network portion.

10. A mobility anchor device as claimed in any of claims 7 to 9, operable to interface with a serving gateway of the core network portion.

11. A mobility anchor device as claimed in any of claims 7 to 10, operable to shield mobility related signalling as a result of UE mobility between the source node and the target node from the core network portion of the system.

12. A radio communication system, comprising:
a core network portion including a mobility management entity and a serving gateway;
an access network portion including a source node and a target node; and
a mobility anchor device to manage a signal load between the core network portion and the access network portion in response to handover of user equipment (UE) between source node and the target node, the device operable to;
transmit a node change request to the target node in response to radio measurement parameters for the UE received by the device; and
transmit radio resource control parameters to the UE in response to the request.

13. A system as claimed in claim 12, wherein an interface between the mobility management entity and the access network is terminated at the mobility anchor device.

14. A system as claimed in claim 12 or 13, wherein an interface between the serving gateway and the access network is terminated at the mobility anchor device.

15. A computer program product, comprising a computer usable medium having computer readable program code embodied therein, said computer readable program code adapted to be executed to implement a method, in a radio communication system, for managing a signalling load between a core network portion of the system and an access network portion of the system as claimed in any of claims 1 to 6.

## Amended claims

### Amended claims in accordance with Rule 137(2) EPC.

1. A method, in a radio communication system, for managing a signalling load between a core network portion (107, 109; 205, 207) of the system and an access network portion of the system in response to handover of user equipment (UE) (101; 209; 305; 401; 600) between a source node (403; 617) and a target node (405; 605) in the access network portion, comprising:
providing a mobility anchor device (MAE) (201; 303; 703) supporting centralised radio resource control for the system;
transmitting a node change request to the target node (405; 605) from the MAE (201; 303) in response to a UE handover decision at the MAE (201; 303);
transmitting radio resource control parameters from the MAE (201; 303; 703) to the UE (101; 209; 305) in response to the node change request.

2. A method as claimed in claim 1, wherein the mobility anchor device (201; 303; 703) is operable to support radio resource control for multiple nodes forming a cluster of small cells (203).

3. A method as claimed in claim 1 or 2, wherein the mobility anchor device (201; 303; 703) is operable to store data representing UE context related parameters.

4. A method as claimed in any preceding claim, wherein an interface of a mobility management entity (205; 409) of the core network portion is terminated at the mobility anchor device (201; 303; 703).

5. A method as claimed in any preceding claim, wherein an interface of a serving gateway (207; 410; 615) of the core network portion is terminated at the mobility anchor device (201; 303; 703) or at the cell site of the source (403; 617) or target node (405; 605).

6. A method as claimed in any preceding claim, wherein UE mobility between the source node (403; 617) and the target node (405; 605) is shielded from the core network portion of the system by performing mobility related signalling at the mobility anchor device (201; 303; 703).

7. A mobility anchor device (201; 303; 703) to manage a signalling load between a core network portion (205; 207) of a radio telecommunications system and an access network portion of the system in response to handover of user equipment (UE) (101; 209; 305; 401; 600) between a source node (403; 617) and a target node (405; 605) in the access network portion, the device (201; 303; 703) operable to:
transmit a node change request (402; 602) to the target node (405; 605) in response to radio measurement parameters for the UE received by the device (201; 303; 703); and
transmit radio resource control parameters to the UE (101; 209; 305; 401; 600) in response to the request (402; 602).

8. A mobility anchor device as claimed in claim 7, wherein the device (201; 303; 703) is operable to support centralised radio resource control for the system.

9. A mobility anchor device as claimed in claim 7 or 8, operable to interface with a mobility management entity (201; 303; 703) of the core network portion.

10. A mobility anchor device as claimed in any of claims 7 to 9, operable to interface with a serving gateway (207; 410; 615) of the core network portion.

11. A mobility anchor device as claimed in any of claims 7 to 10, operable to shield mobility related signalling as a result of UE (101; 209; 305; 401; 600) mobility between the source node (403; 617) and the target node (405; 605) from the core network portion of the system.

12. A radio communication system, comprising:
a core network portion (205; 207) including a mobility management entity (201; 303; 703) and a serving gateway (207; 410; 615);
an access network portion including a source node (403; 617) and a target node (405; 605); and
a mobility anchor device (201; 303; 703) to manage a signal load between the core network portion and the access network portion in response to handover of user equipment (UE) (101; 209; 305; 401; 600) between source node (403; 617) and the target node (405; 605), the device (201; 303; 703) operable to; transmit a node change request (402; 602) to the target node (405; 605) in response to radio measurement parameters for the UE (101; 209; 305; 401; 600) received by the device (201; 303; 703); and
transmit radio resource control parameters to the UE (101; 209; 305; 401; 600) in response to the request (402; 602).

13. A system as claimed in claim 12, wherein an interface between the mobility management entity (201; 303; 703) and the access network is terminated at the mobility anchor device (201; 303; 703).

14. A system as claimed in claim 12 or 13, wherein an interface between the serving gateway (207; 410; 615) and the access network is terminated at the mobility anchor device (201; 303; 703).

15. A computer program product, comprising a computer usable medium having computer readable program code embodied therein, said computer readable program code adapted to be executed to implement a method, in a radio communication system, for managing a signalling load between a core network portion (205; 207) of the system and an access network portion of the system as claimed in any of claims 1 to 6.
